# EUROPÄISCHE PATENTANMELDUNG

(11) **EP 0 572 754 A1**
(43) Veröffentlichungstag der Anmeldung: **08.12.1993**
(21) Anmeldenummer: 92830077.1
(22) Anmeldetag: 05.06.1992
(51) Int. Cl.: B23D 47/00, B23D 61/10

(54) **Vorrichtung zum Vermeiden von mechanischen und akustischen Vibrationen bei Kreissägeblättern**

(71) Anmelder: Marconi, Bruno, I-00011 Villalba di Guidonia (IT)
(72) Erfinder: Marconi, Bruno, I-00011 Villalba di Guidonia (IT)
(74) Vertreter: Popp, Eugen, Dr.

(57) **Zusammenfassung**

Anordnung zur Befestigung eines Kreissägeblatts auf einer Antriebswelle zwischen zwei Flanschen, wobei zwischen Kreissägeblatt und den Flanschen jeweils eine geräusch- und vibrationsdämpfende Ringscheibe angeordnet ist.

## Beschreibung

Die bestehenden strengen Normen Euer die akustische Umweltverschmutzung empfehlen verschiedene Vorrichtungen um den Laerm, der bei der Verarbeitung von Marmor, Granit u. a. mit Diamantsaegen anfaellt, zu verringern. Das Dispositiv Marconi wurde erarbeitet, um die verschiedenen technischen Probleme zu loesen.

Italien ist traditionsgemaess das fuehrende Land fuer Erfahrung, Inspiration und Faehigkeit in der Bearbeitung von Marmor u. a. und damit aeusserst sensibel Euer neue Anforderungen. Alle Forschungen wurden bisher auf den Metallkern beschraenkt, Traeger der Scheuerwirkung durch Diamantsegmente aus denen die Saegen bestehen. Die vorhandenen Maschinen sind sehr variabel und unterscheiden sich durch verschiedene Ergebnisse der Maschinenhersteller. Sicher ist, daß waehrend der Verarbeitung sehr laestige und oft auch unertraegliche Geraeusche entstehen, die dauernde Stoerung des Gehoers mit den entsprechenden Konsequenzen hervorrufen koennen.

Durch was entstehen diese Geraeusche; Die Ursachen sind sehr verschiedener Natur und nicht bestimmt feststellbar. Bei der Anwendungsanalyse kann man verschiedene Faktoren und Nebenursachen aufzaehlen die den Gesamtrumor ausmachen.

Die Anwendung all dieser Saegen ist fast ueberall gleich: sie werden auf eine Welle zwischen zwei Metallflanschen gesetzt und am oberen Teil von einer Haube geschuetzt, welche auch dazu dient Wasserspritzer und Schlamm abzuleiten. Der Durchmesser der Saegen laeuft von wenigen Zentimetern bis 3500 mm. Fuer den Durchmesser der Flanschen wurde nie und wird nie ein genaues Mass oder Angabe in Bezug auf die Saege gestellt. Das Mass der Flansche sollte ein Drittel bis ein Viertel des Saegendurchmessers betragen.

Die Spannung des Saegekerns sollte sich je Umfangsgeschwindigkeit veraendern.

Die Entfernung zwischen den Diamantzaehnen sollte so gering wie moeglich gehalten werden.

Auch die geeignete Verteilung des Wassers ist ein Faktor zur Amortisierung der Resonanz. Die Haube hat eine nicht zu uebersehende Rolle in der Laermentstehung, sei es wegen ihrer geometrischen Form, sei es durch das Herstellungsmaterial. Natuerlich beeintraechtigt das Herstellungsmaterial aller Maschineneinzelteile die mehr oder minder grosse Elastizitaet der gesamten Maschine.

Das D.M. besteht aus zwei Flanschen mit dem gleichen Durchmesser der Metallflanschen und wird zwischen diese und den Saegekern gesetzt, weil man davon ableitet, dass alle Geraeusche eine Folge der mechanischen Vibrationen sind. Schliesst man diese aus, verringert sich automatisch der akustische Effekt. Das Material dieser Flanschen besteht aus Hartgummi oder harzhaltigem Gummi, um auch den Druck der Blockierung der Saege auszuhalten. Mit den beschriebenen eingesetzten Flanschen entsteht eine optimale Verklemmung der Saege, durch komplette Kontaktoberflaeche derselben, welche keine Zwischenraeume oder Verminderung in der Blockierung auf die Achse der Saege zulaesst. Das D.M. ist sehr ratsam bei Maschinen bei denen die Saege direkt auf die Motorenwelle montiert wird, da diese sehr steif und sensibel auf mechanische und akustische Resonanz reagiert. Der Laermegrad wurde in den ersten Proben erheblich verringert. Ausserdem wurde eine Mehrleistung der Saege von 10% und mehr erreicht.

Dem Antragsteller liegt nicht vor, dass bis heute eine Vorrichtung mit diesen Eigenschaften und Vorteilen hergestellt wurde.

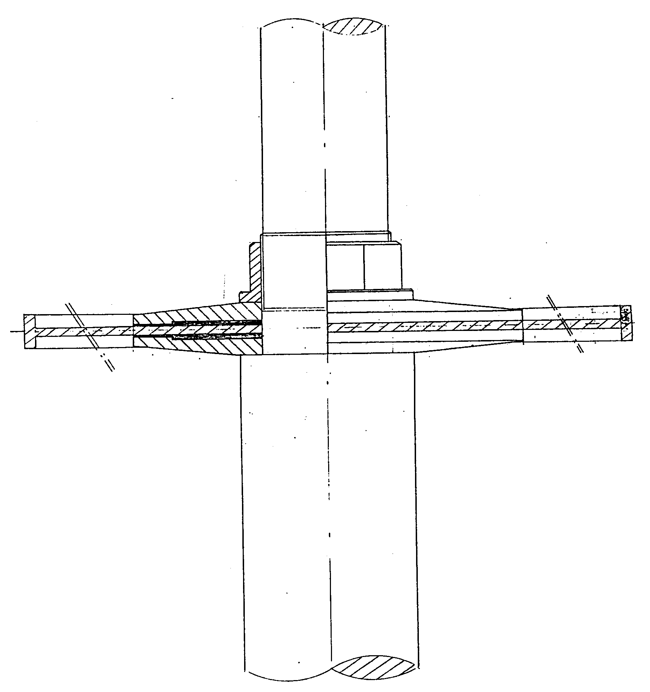

## Patentansprüche

1. Anordnung zur Befestigung eines Kreissägeblatts auf einer Antriebswelle zwischen zwei Flanschen,
dadurch gekennzeichnet, daß
an jeder Seite des Kreissägeblatts zwischen diesem und dem Flansch eine ringförmige Scheibe aus vibrations- und geräuschdämpfendem Material angeordnet ist.

2. Anordnung nach Anspruch 1,
dadurch gekennzeichnet, daß die ringförmige Scheibe einen Durchmesser entsprechend dem Durchmesser der Flansche aufweist.

3. Anordnung nach Anspruch 1 oder 2,
dadurch gekennzeichnet, daß die ringförmige Scheibe aus Hartgummi oder harzhaltigem Gummi besteht.

4. Anordnung nach einem der Ansprüche 1 bis 3,
dadurch gekennzeichnet, daß die ringförmige Scheibe eine Ringstufe aufweist dergestalt, daß der radial äußere Bereich der Scheibe eine vergleichsweise geringe Dicke aufweist.

5. Verwendung einer Anordnung gemäß einem der Ansprüche 1 bis 4 in der Steinindustrie, das heißt für Kreissägeblätter zum Schneiden von Granit, Marmor oder dergleichen.
